# EUROPÄISCHE PATENTSCHRIFT

(11) **EP 0 832 553 B1**
(45) Veröffentlichungstag und Bekanntmachung des Hinweises auf die Patenterteilung: **23.01.2002**
(21) Anmeldenummer: 97111391.5
(22) Anmeldetag: 05.07.1997
(51) Int. Cl.: A01F 12/40

(54) **Mähdrescher**
Combine
Moissonneuse-batteuse

(30) Priorität: 30.09.1996 DE 19640047
(43) Veröffentlichungstag der Anmeldung: 01.04.1998
(73) Patentinhaber: CLAAS KGaA, 33428 Harsewinkel (DE)
(72) Erfinder: Roberg, Alfons, 33428 Harsewinkel (DE)

(56) Entgegenhaltungen:
- EP-A- 0 124 628
- DE-A- 19 600 390
- GB-A- 2 121 664
- US-A- 2 950 747
- US-A- 3 815 823

## Beschreibung

Die Erfindung betrifft einen Mähdrescher mit einem Mähtisch und einem das Mähgut abtransportierenden Schrägforderer, dem ein Tangential- oder Axialdreschwerk nachgeschaltet ist, dem sich in Gutflußrichtung mindestens eine nach dem Axialflußverfahren arbeitende Trenneinrichtung anschließt, die je einen rotierend antreibbaren Trennrotor aufweist, der umfangsseitig mit spiral- oder wendelförmig verlaufenden Förderelementen bestückt ist und der von einem auf einer oberen Abdeckhaube und einem unteren Abscheidekorb gebildeten Gehäuse umschlossen ist, daß die Förderelemente jedes Trennrotors innerhalb eines bestimmten Bereiches der Förderstrecke Radialschlitze aufweisen, die bedarfsweise mit feststehenden, einem Teilbereich des Gehäuses zugeordneten Häckselmessern zusammenwirken und daß innenseitig an der Abdeckhaube und gegebenenfalls am Abscheidekorb Leitstege zur Dreschgutführung angeordnet sind.

Bei einem aus der DE 196 00 390 A1 (Patentanmeldung P 196 00 390.3) bekannten Mähdrescher erstrecken sich die innenseitig am Gehäuse angesetzten Leitstege ausschließlich über den Bereich, der nicht zum Häckseln des Strohes verwendet wird. Daraus ergibt sich, daß in diesem Bereich der Durchfluß des Dreschgutes nicht mehr in allen Fällen kontinuierlich verläuft, so daß es zu Stauungen kommt, die dazu führen, daß ein erhöhtes Drehmoment zum Antrieb des Trennrotors oder der beiden Trennrotoren kommt.

Der vorliegenden Erfindung liegt die Aufgabe zugrunde, einen Mähdrescher der eingangs näher beschriebenen Art in konstruktiv einfacher Weise so auszubilden, daß ein gleichmäßiger Durchfluß des Dreschgutes auch im Bereich der Axialfluß-Häckseleinrichtung erreicht wird, so daß es weder zu einem Stau oder Verstopfungen kommt, die ein erhöhtes Drehmoment für den Antrieb des Trennrotors bzw. der Trennrotoren verursachen.

Die gestellte Aufgabe wird gelöst, indem die Mulde an der inneren, dem Trennrotor zugewandten Seite mit funktionsgerecht zu den Leitstegen der Abdeckhaube und gegebenenfalls des Abscheidekorbes stehenden Führungsstegen versehen ist, die im Bereich der Durchtrittsschlitze für die Häckselmesser unterbrochen sind, wodurch die Halme beim Einlauf in die Axialfluß-Häckseleinrichtung quer zu den Häckselmessern stehen.

Durch die am Rotorgehäuse innenseitig angeordneten Führungsstege wird über die gesamte Länge jedes Trennrotors ein durchgehendes Leitsystem geschaffen, welches frei von Hindernissen ist. Da ein Stau des Dreschgutes ausgeschlossen werden kann, werden mit dem Stroh oder mit dem Häcksel keine Körner als Verlust ausgeschieden. Die Führungsstege sind in ihrem spiralförmigen Verlauf an der Einlauf- sowie auch an der Auslaufseite der Häckseleinrichtung bis unmittelbar an die Durchtrittsschlitze für die Häckselmesser geführt, wodurch sichergestellt ist, daß auch nach dem Häckseln das Gut direkt wieder von dem Leitsystem übernommen wird. Dadurch ist ein kontinuierlicher Durchfluß gewährleistet.

Bei einer bevorzugten Ausführungsform steht die Axialfluß-Häckseleinrichtung im Abstand zum Austragende des Trennrotors. Für diese Ausführung ist vorgesehen, daß die Führungsstege beidseitig der Durchtrittsschlitze für die Häckselmesser angeordnet sind, und daß die einander zugewandten Enden der Führungsstege, bezogen auf die Drehachse des Trennrotors, auf gleicher oder annähernd gleicher Höhe liegen. Dadurch wird auch der kontinuierliche Durchfluß gewährleistet, obwohl jeder Führungssteg aus zwei Einzelstücken besteht. Dabei ist es dann besonders vorteilhaft, wenn in Abhängigkeit vom Dreschgut die Neigungswinkel zu den Häckselmessern einstellbar sind.

In einer ersten Ausführung sind die durch die Radialschlitze der Förderelemente des Trennrotors gebildeten Schlagzähne an im Abstand zueinander stehenden Tragringen angeordnet, die auf den Trennrotormantel vorzugsweise durch Schweißung fest aufgesetzt sind. Diese Ausführung ist besonders einfach. Da es jedoch notwendig wird, nach einer gewissen Betriebszeit oder beispielsweise auch durch Fremdkörpereinwirkung die Schlagzähne auszuwechseln, ist gemäß einer zweiten Ausführung vorgesehen, daß die sich über den Bereich der Axialfluß-Häckseleinrichtung erstreckenden Schlagzähne an einer sich über deren Länge erstreckenden Traghülse angeordnet sind. Die Schlagzähne können dann durch spangebende Bearbeitung des Hülsenrohlings hergestellt werden. Da jedoch die auf den Trennrotormantel aufgesetzten Tragringe oder die aufgesetzte Traghülse zwangsläufig einen größeren Durchmesser hat als der Trennrotormantel selbst wird dadurch ein den kontinuierlichen Durchfluß beeinträchtigendes Hindernis geschaffen. Um diesen Höhen- bzw. Durchmesserunterschied auszugleichen, ist vorgesehen, daß an der Einlaufseite der Axialfluß-Häckseleinrichtung ein Einlaufkonus montiert ist. Dieser Einlaufkonus kann bei der Schweißkonstruktion ebenfalls mit dem Trennrotormantel und dem ersten Tragring verschweißt sein. Sofern die Schlagzähne an einer Traghülse angeordnet sind, ist es zur Verringerung der Einzelteile zweckmäßig, wenn der Einlaufkonus mit der Traghülse einstückig ausgebildet ist. Eine reparaturfreundliche Ausführung wird jedoch erreicht, wenn die Schlagzähne aufweisende Tragkörper zweiteilig ausgebildet sind bzw. aus mindestens zwei Halbschalen besteht, die lösbar mit dem Trennrotormantel verbunden sind. Dies kann auf verschiedene Weise erfolgen. In einer ersten Ausführung können die beiden Teile der Traghülse durch stirnseitige Spannbänder miteinander verbunden sein. Es muß jedoch sicher gestellt sein, daß sich die Traghülsen gegenüber dem Trennrotormantel nicht verdrehen. Dazu können die Spannbänder beispielsweise am Trennrotormantel festgelegt sein. Zusätzlich können sie mit der Traghülse verschraubt sein. Bei einer anderen Ausführung können die beiden Halbschalen der Traghülse mit dem Trennrotormantel verschraubt sein. Es sind dann bei einer Einstückigkeit des Einlaufkonus mit der Traghülse im Bereich des Einlaufkonus stufenförmige Bohrungen notwendig. An der anderen Seite könnte ein entsprechender Ansatz mit Schraubenlöchern liegen.

Bei der Schweißkonstuktion können einzelne Schlagzähne nur ausgewechselt werden, indem die Schweißnähte entfernt werden. Dies ist jedoch arbeitsaufwendig. Bei der Anordnung mit einer aus zwei Halbschalen oder aus einer Vielzahl von Halbringen bestehenden Tragkörper lassen sich nur die daran angesetzten Schlagzähne ersetzen. Gemäß einer anderen Ausführung ist deshalb vorgesehen, daß jeder einzelne Schlagzahn mit dem Tragring oder der Traghülse verschraubt ist. Dabei ist es dann zweckmäßig, wenn jeder Schlagzahn mit zwei aneinander gegenüberliegenden Seiten angeordneten Befestigungsflanschen versehen ist. Diese liegen vorteilhafterweise in Drehrichtung vor und hinter dem Schlagzahn.

Anhand der beiliegenden Zeichnungen wird die Erfindung noch näher erläutert. Es zeigen:
- Figur 1: einen erfindungsgemäßen Mähdrescher in einer schematischen Teilseitenansicht,
- Figur 2: einen Schnitt längs der Linie II-II,
- Figur 3: die Mulde des Gehäuses in einer Abwicklung in Draufsicht,
- Figur 4: einen Teilschnitt des Trennrotors im Bereich der Axialfluß-Häckseleinrichtung,
- Figur 5: die an einer Traghülse angeordneten Schlagzähne in Schnittdarstellung,
- Figur 6: die an einer Traghülse angeordneten Schlagzähne mit dem einstückigen Einlaufkonus und
- Figur 7: einen einzeln auf einen Tragring oder Traghülse aufgeschraubten Schlagzahn.

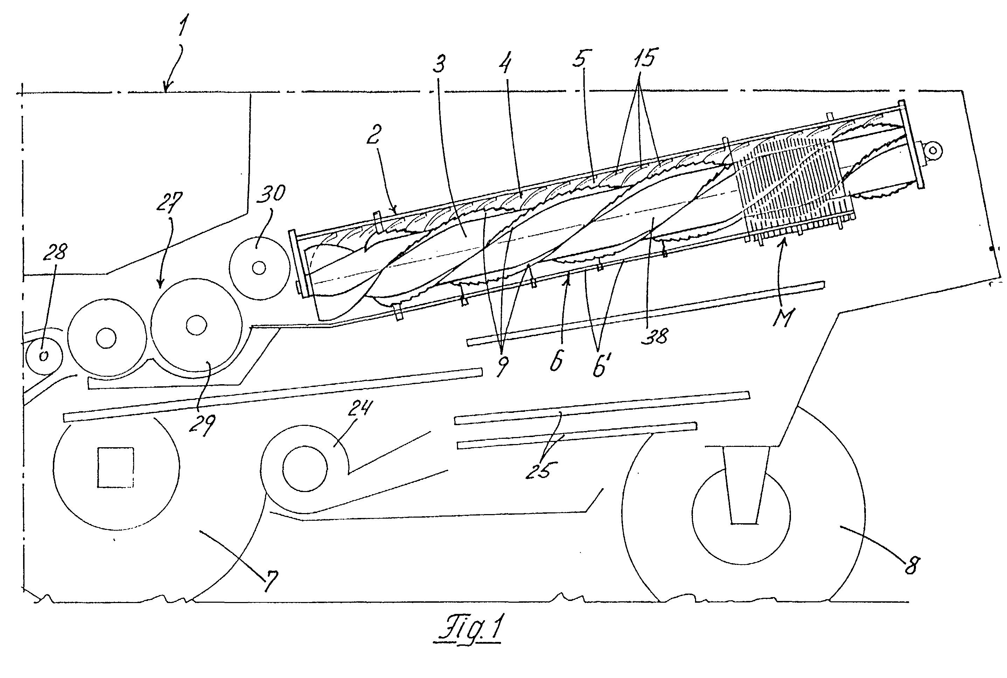

Der in der Figur 1 teilweise dargestellte Mähdrescher 1 ist mit einer nach dem Axialfluß-Verfahren arbeitenden Trenneinrichtung 2 ausgerüstet, die im wesentlichen aus einem Trennrotor oder aus zwei achsparallelen Trennrotoren besteht. Der Trennrotor bzw. die Trennrotoren 3 sind von einem Gehäuse 4 umschlossen. Dieses Gehäuse 4 besteht aus einem Oberteil in Form einer Haube 5 und einem Unterteil in Form eines Abscheidekorbes 6. Im dargestellten Ausführungsbeispiel liegt die Drehachse jedes Trennrotors 3 quer zu den Radachsen der Räderpaare 7, 8. Demzufolge ist die Förderrichtung jedes Trennrotors 3 entgegengesetzt zur Vorwärtsfahrtrichtung des Mähdreschers 1. Ferner ist im dargestellten Ausführungsbeispiel die Drehachse jedes Trennrotors 3 gegen die Horizontale geneigt, wobei sie nach hinten, d.h. dem Abgabeende jedes Trennrotors 3 ansteigt. Im Abstand zum Austragende jedes Trennrotors 3 liegt eine noch näher erläuterte Axialfluß-Häckseleinrichtung zum Häckseln des Strohes. Um das Dreschgut kontinuierlich zu transportieren, sind auf den Trennrotormantel 38 mehrere wendelförmig oder spiralförmig verlaufende Förderleisten 9 aufgesetzt, deren äußere Kanten gezahnt sind. Im Bereich der Axialfluß-Häckseleinrichtung sind diese Förderleisten mit Radialschlitzen versehen, die mit in einer Reihe angeordneten Häckselmessern 13 zusammenwirken. Die Häckselmesser 13 liegen im Bereich einer Mulde M die fluchtend zum Abscheidekorb 6 steht. Damit die kontinuierliche Förderung des Dreschgutes gewährleistet ist, sind an der Innenseite der Haube 5 und gegebenenfalls auch an der Innenseite des Abscheidekorbes 6 Leitstege 15 angesetzt, die entweder achsparallel zur Drehachse jedes Trennrotors 3 oder ebenfalls wendeloder spiralförmig verlaufen können.

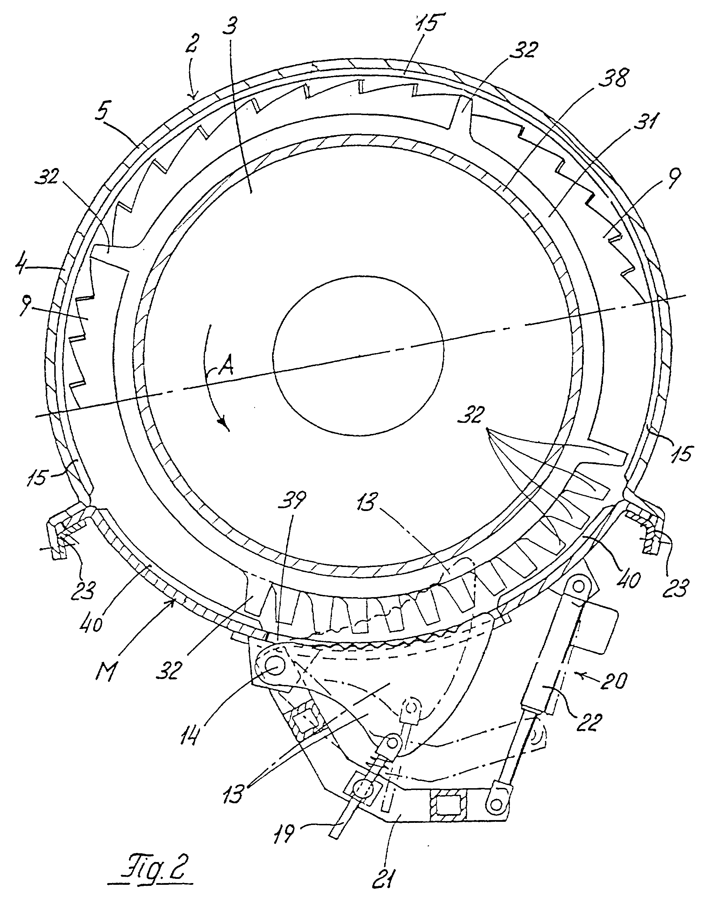

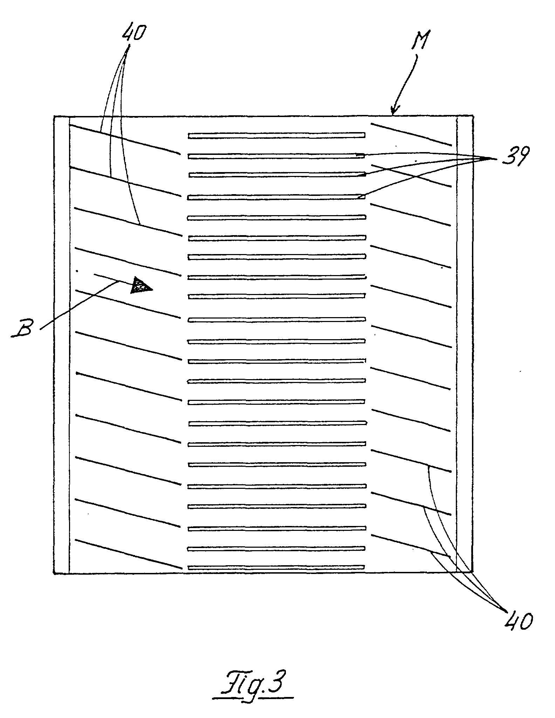

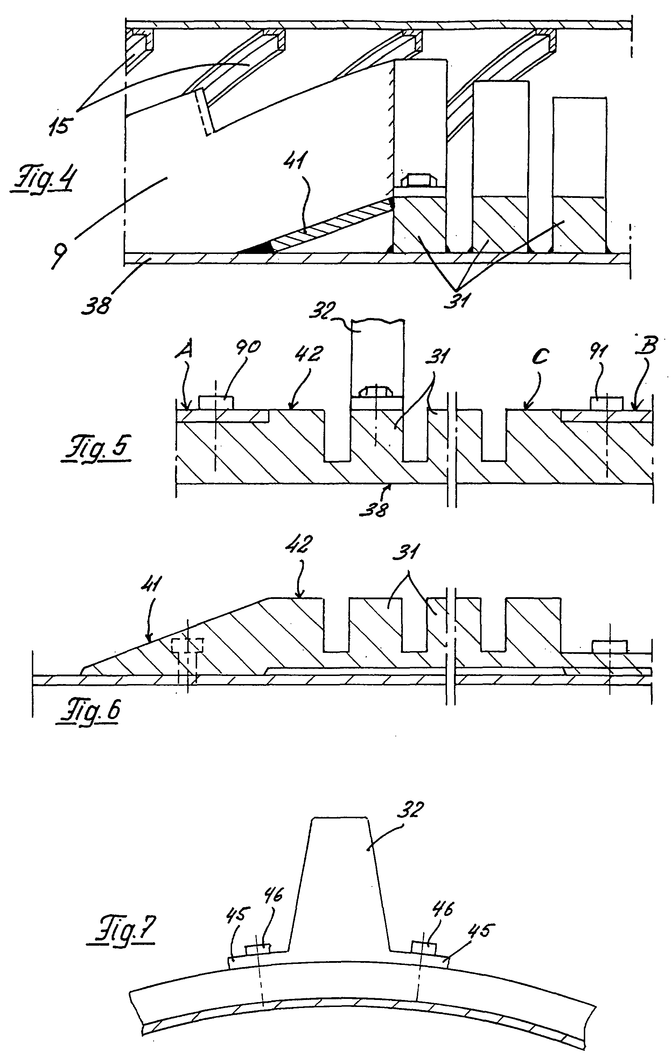

Die Figuren 2 und 3 zeigen, daß die Mulde M im mittleren Bereich mit einer Vielzahl von Messerdurchtrittsschlitzen 39 versehen ist. Beidseitig dieser Messerdurchtrittsschlitze sind an die Innenseite der Mulde M eine Vielzahl von Führungsstegen 40 angesetzt, die im Bereich der Messerdurchtrittsschlitze 39 unterbrochen und somit aus zwei Teilstücken bestehen. Die einander zugewandten Stirnenden der Teilstücke der Führungsstege 40 liegen direkt an den Messerdurchtrittsschlitzen 39 an. Die Figur 3 zeigt, daß die Messerdurchtrittsschlitze sich über einen vorgegebenen Bereich der Mulde M erstrecken. Die Häckselmesser 13 sind auf einer zur Drehachse jedes Trennrotors 3 achsparallelen Aufnahmeachse 14 drehfest aufgesetzt. Die Teilstücke der Führungsstege 40 stehen schräg zu den Messerdurchtrittsschlitzen 39, wie die Figur 3 zeigt. Die Einlaufseite für das zu häckselnde Gut ist in der Darstellung gemäß der Figur 3 links, wie durch den Pfeil B gekennzeichnet. Die Drehrichtung des Trennrotors 3 ist in der Figur 2 durch den Pfeil A gekennzeichnet. Die Querschnittsform der Führungsstege 40 kann verschieden sein. Gemäß der Ausführung nach der Figur 4 ist sie winkelförmig. Die Häckselmesser 13 können mittels eines Stelltriebes 20 in eine in strichpunktierten Linien dargestellte Betriebsstellung und eine in Vollinien dargestellte Außerbetriebsstellung geschwenkt werden. Der Stelltrieb 20 besteht aus einem auf die achsparallele Aufnahmeachse 14 aufgesetzten Winkelhebel 21 und einem Hydraulikzylinder 22. An dem Winkelhebel 21 sind, der Anzahl der Häckselmesser entsprechend in einem Lagerklotz der Hebel 19 als Messerstütze angeordnet, damit in der Betriebsstellung die Häckselmesser einzeln entgegen der Wirkung einer Feder verschwenkt werden können. Der Abscheidekorb 6 besteht aus Einzelkörben 6', die mit der Haube 5 in Profilschienen 23 lösbar und verschiebbar verbunden sind. Bei der Ausführung nach der Figur 2 sind vier um jeweils einen Winkel von 90° versetzte Schlagzähne 32 auf einem Tragring 31 aufgesetzt. Die Figur zeigt, daß die Schlagzähne von zwei in der Reihe aufeinander folgenden Tragringen um einen Winkel versetzt sind.

Bei der Ausführung nach der Figur 2 ist nicht dargestellt, wie die Tragringe 31 auf dem Trennrotormantel 38 festgesetzt sind. Bei der Ausführung nach der Figur 4 sind die in einer Reihe auf dem Trennrotormantel 38 aufgesetzten Tragringe 31 durch Schweißnähte festgesetzt. Damit der kontinuierliche Durchfluß des Dreschgutes gewährleistet ist, ist vor dem in Durchflußrichtung ersten Tragring 31 ein Einlaufkonus 41 mit dem Trennrotormantel 38 und diesem Tragring 31 verschweißt. Dadurch werden die Durchmesserdifferenzen zwischen den Tragringen und dem Trennrotormantel 38 überbrückt.

Bei der Ausführung nach der Figur 5 sind die Schlagzähne 32 auf eine Traghülse 42 aufgesetzt, die sich über die Länge der Axialfluß-Häckseleinrichtung erstreckt. Bei dieser Ausführung wird die Durchmesserdifferenz zwischen dem Trennrotormantel 38 und den Tragringen 31 dadurch vermieden, in dem der Rotormantel 38 aus einer dreiteiligen Montageeinheit A, B und C besteht, die aus zwei Metallrohrabschnitten A und B und einer, diese Abschnitte verbindende, mit eingeformten Tragringen 31 versehene Rohreinheit C zusammengefügt ist, wobei die Durchmesser aller drei Teil A, B und C gleich ist. Die drei Elemente A, B und C werden stirnseitig ineinandergesetzt und durch Verschraubungen 90, 91 zu einer Einheit als Trennrotor verbunden. Der die Tragringe 31 aufweisende Abschnitt C kann als Gußteil ausgebildet sein, wobei die Schlagzähne 32 ebenfalls gußtechnisch angeformt sind oder austauschbar mit den Tragringen 31 verschraubt sind. Bei den Ausführungen nach den Figuren 5 und 6 können die Traghülsen 42 aus zwie Halbschalen gebildet sein. Auch bei der Figur 6 sind die Tragringe 31 wiederum durch eine spangebende Bearbeitung hergestellt oder in einer Gußform gefertigt. Der Unterschied zu der Ausführung gemäß der Figur 5 liegt einmal darin, daß die Traghülse 42 auf den Mantel des Trennrotors aufgeschoben und verschraubt wird. Der Einlaufkonus 41 ist der Traghülse 42 angeformt. Im Gegensatz zu der beschriebenen Ausführung kann jede Traghülse 42 auch aus mehr als zwei Schalen bestehen.

Die Figur 7 zeigt eine Möglichkeit die Schlagzähne 32 einzeln auszuwechseln. Die Gesamtanordnung der Schlagzähne 32 entspricht der in der Figur dargestellten Ausführung. Die einzelnen Schlagzähne 32 können entweder auf einen Tragring 31 entsprechend der Figur 2 oder entsprechend den Figuren 5 und 6 auf eine Traghülse 42 aufgesetzt sein. Jeder Schlagzahn 32 ist mit zwei Befestigungsflanschen 45 versehen, die im dargestellten Ausführungsbeispiel in Drehrichtung des Trennrotors 3 gesehen vom und hinten liegen. Die Verbindung mit dem Tragring 31 erfolgt durch Schrauben 46.

Der in der Figur 1 nur teilweise dargestellte Mähdrescher 1 ist ferner noch mit einem unterhalb des Trennrotors 3 liegenden Gebläse 24 und einer ebenfalls unter des Trennrotors 3 liegenden Siebeinrichtung 25 ausgerüstet. In nicht näher dargestellter Weise ist im Austragende des Trennrotors 3 noch eine allgemein bekannte Verteilereinrichtung für das Häckselgut angeordnet. Außerdem ist der Mähdrescher 1 in an sich bekannter Weise mit einem nicht dargestellten Mähtisch und einem das Mähgut zu einem Dreschwerk 27 fördernden Schrägförderer 28 ausgerüstet, von dem nur das hintere Ende dargestellt ist. Das Dreschwerk 27 beinhaltet eine Dreschtrommel 29 und eine Übergabetrommel 30, die unmittelbar vor dem Aufgabeende des Trennrotors 3 quer zu dessen Drehachse gelagert ist. Im Gegensatz zu der dargestellten Ausführung, könnte jedoch die Drehachse des Trennrotors 3 auch achsparallel zu den Achsen der Räderpaare 7, 8 stehen.

## Patentansprüche

1. Mähdrescher (1) mit einem Mähtisch und einem das Mähgut abtransportierenden Schrägförderer (28), dem ein Tangential oder Axialdreschwerk (27) nachgeschaltet ist, dem sich in Gutflußrichtung mindestens eine nach dem Axialfluß verfahren arbeitende Trenneinrichtung (2) anschließt, die je einen rotierend antreibbaren Trennrotor (3) aufweist, der umfangsseitig mit spiral- oder wendelförmig verlaufenden Förderelementen (9) bestückt ist und der von einem aus einer oberen Abdeckhaube (5) und einem unteren Abscheidekorb (6) gebildeten Gehäuse (4) umschlossen ist, daß die Förderelemente jedes Trennrotors innerhalb eines bestimmten Bereiches der Förderstrecke mit radialen Messerdurchtritts schlitzen (39) versehen sind, die bedarfsweise mit feststehenden, eine Mulde (11) des Gehäuses zugeordneten Häckselmesseren (13) zusammenwirken und das innenseitig an der Abdeckhaube und gegebenenfalls am Abscheidekorb Leitstege (15) zur Dreschgutführung angeordnet sind,
**dadurch gekennzeichnet,**
**daß** die Mulde (M) an der inneren, dem Trennrotor (3) zugewandten Seite mit funktionsgerecht zu den Leitstegen (15) der Abdeckhaube (5) und gegebenenfalls des Abscheidekorbes (6) stehenden Führungsstegen versehen ist, die im Bereich der Messerdurchtrittsschlitze (39) für die Häckselmesser (13) unterbrochen sind.

2. Mähdrescher nach Anspruch 1,
**dadurch gekennzeichnet,**
**daß** die Führungsstege (40) beidseitig der Messerdurchtrittsschlitze (39) für die Häckselmesser (13) angeordnet sind, und daß die einander zugewandten Enden der beidseitigen Führungsstege (40), bezogen auf die Drehachse des Trennrotors (3) auf gleicher oder annähernd gleicher Höhe liegen.

3. Mähdrescher nach Anspruch 2,
**dadurch gekennzeichnet,**
**daß** der Neigungswinkel der Führungsstege (40) gegenüber den Häckselmessern (13) einstellbar ist.

4. Mähdrescher nach Anspruch 1,
**dadurch gekennzeichnet,**
**daß** die Schlagzähne (32) auf im Abstand zueinander stehenden Tragringen (31) angeordnet sind, die auf dem Trennrotormantel (38) vorzugsweise durch Schweißung fest aufgesetzt sind.

5. Mähdrescher nach Anspruch 1,
**dadurch gekennzeichnet,**
**daß** die sich über den Bereich der Axialfluß-Häckseleinrichtung erstreckenden Schlagzähne (32) an einer sich über die Länge der Axialfluß-Häckseleinrichtung erstreckenden Traghülse (42) angeordnet sind.

6. Mähdrescher nach einem oder mehreren der vorhergehenden Ansprüche 1 bis 5,
**dadurch gekennzeichnet,**
**daß** an der Einlaufseite der Axialfluß-Häckseleinrichtung zur Überwindung der Durchmesser zwischen dem Trennrotormantel (3) und den Tragringen (31) oder der Traghülse (42) ein Einlaufkonus (41) vorgesehen ist.

7. Mähdrescher nach Anspruch 6,
**dadurch gekennzeichnet,**
**daß** der Einlaufkonus (41) mit der Traghülse (42) einstückig ausgebildet ist.

8. Mähdrescher nach einem oder mehreren der vorhergehenden Ansprüche 1 bis 7,
**dadurch gekennzeichnet,**
**daß** die die Schlagzähne (32) aufweisende Traghülse (42) mehrteilig ausgebildet ist und mittels auf dem Umfang verteilten Verschaubungen auf dem Trennrotormantel (38) festgesetzt ist.

9. Mähdrescher nach einem oder mehreren der vorhergehenden Ansprüche 1 bis 7,
**dadurch gekennzeichnet,**
**daß** die die Schlagzähne (32) aufweisende Traghülse (42) mehrteilig ausgebildet und mit dem Trennrotormantel (38) verschraubt ist und daß der Einlaufkonus stufenförmige Bohrungen zur Aufnahme von Schrauben (44) und das gegenüberliegende Stirnende als mit Durchgangsbohrungen für Schrauben (44) ausgebildet ist.

10. Mähdrescher nach einem oder mehreren der vorhergehenden Ansprüche 1 bis 6,
**dadurch gekennzeichnet,**
**daß** die Schlagzähne (32) lösbar mit im Abstand zueinander stehenden Tragringen (31) oder mit einer Traghülse (42) verbunden sind.

11. Mähdrescher nach Anspruch 10,
**dadurch gekennzeichnet,**
**daß** jeder Schlagzahn (32) zwei Befestigungsflansche (45) aufweist, die vorzugsweise, in Drehrichtung des Trennrotors (3) gesehen, vor und hinter dem Schlagzahn (32) liegen.

## Claims

1. A combine harvester (1) comprising a cutter table and an inclined conveyor (28) which carries the cut material away and downstream of which is connected a tangential or axial threshing mechanism (27) which is followed in the direction of flow of the material by at least one separating device (2) which operates on the basis of the axial flow process and which has a respective rotatably drivable separating rotor (3) which is equipped at its periphery with conveyor elements (9) extending in a spiral or helical configuration and which is enclosed by a housing (4) formed from an upper cover hood (5) and a lower separator concave (6), and the conveyor elements of each separating rotor are provided within a given region of the conveyor section with radial blade-passage slots (39) which if necessary co-operate with fixed chopper blades (13) associated with a trough (M) of the housing and arranged at the inside on the cover hood and possibly on the separator concave are guidance bars (15) for guiding the threshed material, **characterised in that** at the inward side which faces towards the separating rotor (3) the trough (M) is provided with guide bars which are in functional relationship with the guidance bars (15) of the cover hood (5) and possibly the separator concave (6) and which are interrupted in the region of the blade-passage slots (39) for the chopper blades (13).

2. A combine harvester according to claim 1 **characterised in that** the guide bars (40) are arranged on both sides of the blade-passage slots (39) for the chopper blades (13) and that the mutually facing ends of the guide bars (40) at both sides are at the same or approximately the same height in relation to the axis of rotation of the separating rotor (3).

3. A combine harvester according to claim 1 **characterised in that** the angle of inclination of the guide bars (40) is adjustable with respect to the chopper blades (13).

4. A combine harvester according to claim 1 **characterised in that** the beater teeth (32) are arranged on mutually spaced carrier rings (31) which are fixedly fitted on the periphery (38) of the separating rotor, preferably by welding.

5. A combine harvester according to claim 1 **characterised in that** the beater teeth (32) which extend over the region of the axial flow chopping device are arranged on a carrier sleeve (42) which extends over the length of the axial flow chopping device.

6. A combine harvester according to one or more of preceding claims 1 to 5 **characterised in that** an entry cone (41) is provided at the entry end of the axial flow chopping device for bridging over the diameters between the periphery (38) of the separating rotor and the carrier rings (31) or the carrier sleeve (42).

7. A combine harvester according to claim 6 **characterised in that** the entry cone (41) is in one piece with the carrier sleeve (42).

8. A combine harvester according to one or more of preceding claims 1 to 7 **characterised in that** the carrier sleeve (42) which has the beater teeth (32) is of a multi-part structure and is fixed on the periphery (38) of the separating rotor by means of screws distributed around the periphery.

9. A combine harvester according to one or more of preceding claims 1 to 7 **characterised in that** the carrier sleeve (42) which has the beater teeth (32) is of a multi-part structure and is screwed to the periphery (38) of the separating rotor and that the entry cone has stepped bores for receiving screws (44) and the oppositely disposed end is provided with through bores for screws (44).

10. A combine harvester according to one or more of preceding claims 1 to 6 **characterised in that** the beater teeth (32) are releasably connected to mutually spaced carrier rings (31) or to a carrier sleeve (42).

11. A combine harvester according to claim 10 **characterised in that** each beater tooth (32) has two fixing flanges (45) which are preferably disposed upstream and downstream of the beater tooth (32) as viewed in the direction of rotation of the separating rotor (3).

## Revendications

1. Moissonneuse-batteuse (1) comprenant une table de coupe et un transporteur incliné (28) évacuant le produit de récolte coupé, suivi d'un système batteur (27) tangentiel ou axial auquel se raccorde dans le sens de déplacement du produit de récolte au moins un dispositif séparateur (2) qui fonctionne suivant le procédé de flux axial, qui comprend un rotor séparateur (3) entraîné en rotation, garni sur sa périphéries d'éléments transporteurs (9) en spirale ou en hélice, et qui est entouré d'un carter (4) formé d'un capot supérieur (5) et d'un panier-grille inférieur (6), les éléments transporteurs de chaque rotor séparateur étant munis à l'intérieur d'une zone déterminée du trajet de transport de fentes (39) radiales de passage de couteaux qui, en cas de besoin, coopèrent avec des couteaux hacheurs (13) fixes associés à une partie en auge (M) du carter, et des ailettes de guidage (15) étant disposées du côté intérieur sur le capot et le cas échéant sur le panier-grille, en vue du guidage du produit de battage, **caractérisée par le fait que** la partie en auge (M) est munie sur le côté intérieur tourné vers le rotor séparateur (3) de nervures de guidage (40) qui sont disposées de façon fonctionellement correcte par rapport aux ailettes de guidage (15) du capot (5) et sont interrompues dans la zone des fentes (39) de passage pour les couteaux hacheurs (13).

2. Moissonneuse-batteuse suivant la revendication 1, **caractérisée par le fait que** les nervures de guidage (40) sont disposées sur les deux côtés des fentes (39) de passage pour les couteaux hacheurs (13) et que les extrémités, en regard l'une de l'autre, des nervures de guidage (40) disposées sur les deux côtés se trouvent par rapport à l'axe de rotation du rotor séparateur (3) à la même hauteur ou sensiblement à la même hauteur.

3. Moissonneuse-batteuse suivant la revendication 2, **caractérisée par le fait que** l'angle d'inclinaison des nervures de guidage (40) par rapport aux couteaux hacheurs (13) est réglable.

4. Moissonneuse-batteuse suivant la revendication 1, **caractérisée par le fait que** les dents de battage (32) sont disposées sur des anneaux porteurs (31) espacés qui sont fixés de préférence par soudage sur l'enveloppe (38) du rotor séparateur.

5. Moissonneuse-batteuse suivant la revendication 1, **caractérisée par le fait que** les dents de battage (32) s'étendant sur la zone du dispositif hacheur à flux axial sont disposées sur un manchon porteur (42) s'étendant sur la longueur du dispositif hacheur à flux axial.

6. Moissonneuse-batteuse suivant l'une ou plusieurs des revendications 1 à 5, **caractérisée par le fait qu'**un cône d'entrée (41) est prévu sur le côté d'entrée du dispositif hacheur à flux axial pour compenser la différence des diamètres de l'enveloppe (38) du rotor séparateur et des anneaux porteurs (31) ou du manchon porteur (42).

7. Moissonneuse-batteuse suivant la revendication 6, **caractérisée par le fait que** le cône d'entrée ( 41) est formé d'une seule pièce avec le manchon porteur (42).

8. Moissonneuse-batteuse suivant l'une ou plusieurs des revendications 1 à 7, **caractérisée par le fait que** le manchon porteur (42) présentant les dents de battage (32) est formé de plusieurs parties et est fixé sur l'enveloppe (38) du rotor batteur par des assemblages à vis répartis sur le périphérie.

9. Moissonneuse-batteuse suivant l'une ou plusieurs des revendications 1 à 7, **caractérisée par le fait que** le manchon porteur (42) présentant les dents de battage (32) est formé de plusieurs parties et fixé par vissage sur l'enveloppe (38) du rotor batteur et que le cône d'entrée est muni de trous étagés pour recevoir des vis (44) et l'extrémité frontale opposée est munie de trous de passage pour des vis (44).

10. Moissonneuse-batteuse suivant l'une ou plusieurs des revendications 1 à 6, **caractérisée par le fait que** les dents de battage (32) sont reliées de façon amovible à des anneaux porteurs (31) espacés ou à un manchon porteur (42).

11. Moissonneuse-batteuse suivant la revendication 10, **caractérisée par le fait que** chaque dent de battage (32) présente deux pattes de fixation (45) disposées de préférence dans le sens de rotation du rotor séparateur (3) en avant et en arrière de la dent de battage (32).
